# EUROPÄISCHE PATENTANMELDUNG

(11) **EP 4 835 831 A1**
(43) Veröffentlichungstag der Anmeldung: **04.11.2026**
(21) Anmeldenummer: 26163326.7
(22) Anmeldetag: 09.03.2026
(51) Int. Cl.: G06T 19/00, G06T 15/20, G06T 15/50, H04N 5/222

(54) **VERFAHREN UND VORRICHTUNG ZUM ABGLEICHEN VON REALEN UND VIRTUELLEN INHALTEN EINER SZENE**

(30) Priorität: 30.04.2025 DE 102025116748
(71) Anmelder: K5 Lux AI GmbH, 81543 München (DE)
(72) Erfinder: GROLLMANN, Clarens, 81543 München (DE)
(74) Vertreter: Weickmann & Weickmann PartmbB

(57) **Zusammenfassung**

Die Erfindung betrifft ein Verfahren zum Abgleichen von realen und virtuellen Inhalten einer Szene (10, 12), umfassend Bereitstellen einer realen Lichtquelle (16), Bereitstellen von Informationen zu der Lichtquelle (16) an eine Steuerungsvorrichtung, Erfassen einer Position eines realen Objekts (14) und/oder einer Beleuchtungssituation des realen Objekts (14), Erzeugen eines dreidimensionalen Simulationsmodells (36) der realen Szene (10), Erzeugen eines dreidimensionalen Modells (72) einer virtuellen Szene (12), welches dazu geeignet ist, an einer Bildausgabeeinheit mit einer zur Darstellung geeigneten Bildfläche (20) dargestellt zu werden, Erfassen einer Relativposition der Bildfläche (20) zu der wenigstens einen realen Lichtquelle (16) und/oder zu dem realen Objekt (14), Kombinieren des Simulationsmodells (36) der realen Szene (10) mit dem Modell (72) der virtuellen Szene (12), sodass an der Bildfläche (20) ein Übergang aus der realen Szene (10) in die virtuelle Szene (12) stattfindet, und Erfassen der realen Szene (10) und der virtuellen Szene (12) zumindest abschnittsweise durch einen Signalempfänger (28). Ferner betrifft die Erfindung eine entsprechende Vorrichtung.

## Beschreibung

Die vorliegende Erfindung betrifft ein Verfahren zum Abgleichen von realen und virtuellen Inhalten einer Szene.

Aus dem Stand der Technik sind, zum Beispiel für die Produktion von Spielfilmen oder Fernsehserien, Filmsets bekannt, bei welchen eine reale Filmszene vor einer über eine Bildwand dargestellten virtuellen Filmszene aufgebaut ist, um den Eindruck zu vermitteln, dass sich die reale Filmszene in die virtuelle Filmszene fortsetzt.

Um diesen Eindruck glaubhaft vermitteln zu können, ist es derzeit notwendig, die Lichtgestaltung (Positionierung von Lichtquellen und die wechselseitige Lichtwirkung von Szenenobjekten, wie zum Beispiel Schattenwürfen) in der realen Szene und in der virtuellen Szene unabhängig voneinander zu planen und durchzuführen, um die entsprechende virtuelle Filmszene an der Bildwand zum Zeitpunkt der Filmaufnahme darzustellen. Derzeitige Systeme sind allgemein nicht in der Lage, auf sich verändernde Situationen in der realen Filmszene, insbesondere in Bezug auf sich verändernde Beleuchtungssituationen der realen Filmszene, welche sich in die virtuelle Filmszene fortsetzen müssten, zum Zeitpunkt des Beleuchtungsaufbaus oder der Filmaufnahme in Echtzeit oder nahezu in Echtzeit zu reagieren.

Es ist daher die Aufgabe der vorliegenden Erfindung ein Verfahren zum Abgleichen von realen und virtuellen Inhalten einer Szene bereitzustellen, welches es ermöglicht, in einer verbesserten Weise eine reale Filmszene und eine virtuelle Filmszene miteinander zu verbinden und so, zum Beispiel für Schauspieler in der realen Filmszene und/oder Betrachter/Signalempfänger der realen Szene, einen realistischeren Übergang zwischen der realen Filmszene und der virtuellen Filmszene zu schaffen.

Diese Aufgabe wird gemäß der vorliegenden Erfindung durch ein Verfahren zum Abgleichen von realen und virtuellen Inhalten einer Szene gelöst, wobei das Verfahren die folgenden Schritte umfasst:
- Bereitstellen von wenigstens einer realen Lichtquelle in der realen Szene,
- Bereitstellen von Informationen zu der wenigstens einen realen Lichtquelle an eine Steuerungsvorrichtung, wobei die Informationen wenigstens eines umfassen aus einer Hauptabstrahlrichtung, eines Abstrahlkegels, eines Abstrahlfarbspektrums und einer Abstrahlhelligkeit der wenigstens einen realen Lichtquelle,
- Erfassen einer Position eines realen Objekts in der realen Szene relativ zu der wenigstens einen realen Lichtquelle und/oder einer Beleuchtungssituation des realen Objekts in der realen Szene auf Grundlage des von der wenigstens einen realen Lichtquelle abgegebenen Lichts,
- Erzeugen durch die Steuerungsvorrichtung eines dreidimensionalen Simulationsmodells der realen Szene, welches wenigstens eines umfasst aus den Informationen zu der wenigstens einen realen Lichtquelle, der Position des realen Objekts relativ zu der wenigstens einen realen Lichtquelle und der Beleuchtungssituation des realen Objekts,
- Erzeugen eines dreidimensionalen Modells einer virtuellen Szene, welches dazu geeignet ist, an einer Bildausgabeeinheit mit einer zur Darstellung geeigneten Bildfläche dargestellt zu werden,
   wobei das Modell der virtuellen Szene wenigstens Informationen bezüglich einer Position eines virtuellen Objekts relativ zu der Bildfläche umfasst,
- Erfassen einer Relativposition der Bildfläche zu der wenigstens einen realen Lichtquelle und/oder zu dem realen Objekt,
- Kombinieren des Simulationsmodells der realen Szene mit dem Modell der virtuellen Szene, sodass an der Bildfläche ein Übergang aus der realen Szene in die virtuelle Szene derart stattfindet, dass die Beleuchtungssituation des realen Objekts in die Darstellung der virtuellen Szene durch die Bildausgabeeinheit an der Bildfläche fortgesetzt wird, und
- Erfassen der realen Szene und der virtuellen Szene zumindest abschnittsweise durch einen Signalempfänger.

In diesem Zusammenhang sei darauf hingewiesen, dass im Rahmen der vorliegenden Erfindung als "Signalempfänger" sowohl technische als auch menschliche Signalempfänger beziehungsweise Nachrichtenempfänger bezeichnet werden können. So kann ein derartiger Signalempfänger eine Kamera, insbesondere eine Produktionskamera, zur Aufzeichnung von Bildern und/oder eine menschliche Sinneswahrnehmung, insbesondere das menschliche Auge, umfassen.

Ferner sei erwähnt, dass als "Hauptabstrahlrichtung" zum Beispiel eine Richtung parallel oder konzentrisch zu einer Mittelachse des Abstrahlkegels oder parallel oder konzentrisch zu einer Achse verstanden werden kann, welche auf eine Lichtaustrittsfläche, insbesondere an einer in Bezug auf einen Rand der Lichtaustrittsfläche mitten Stelle, der Lichtquelle orthogonal ausgerichtet ist.

Eine "Beleuchtungssituation" kann insbesondere Informationen über einen vom Objekt geworfenen Schatten umfassen, der zum Beispiel durch die Beleuchtung der wenigstens einen Lichtquelle erzeugt wird, wobei der Schattenwurf hierbei nur beispielhaft sein soll. Andere durch das reale Objekt verursachte Lichtveränderungen können ebenso relevant sein und durch das hier beschriebene Verfahren in äquivalenter Weise auf die virtuelle Szene übertragen werden. Ein weiteres solches Beispiel kann zum Beispiel die Reflexion von Licht an einer spiegelnden oder glänzenden Oberfläche sein.

Eine "Szene", wie hier verwendet, kann beispielsweise eine Filmszene oder eine Szene eines Live-Events, beispielsweise im Rahmen von E-Sport oder immersive Event Veranstaltungen, sein.

Das Erfassen der Relativposition der Bildfläche kann ein Erfassen eines Abstands eines Mittelpunkt und/oder eines Schwerpunkts der Bildfläche und/oder wenigstens eines an einer Außenkontur der Bildfläche angeordneten Punkts zu der wenigstens einen realen Lichtquelle und/oder zu dem realen Objekt umfassen. Insbesondere kann das Erfassen der Relativposition der Bildfläche, in Kenntnis der Geometrie der Bildfläche, ein Erfassen eines Abstands der wenigstens einen realen Lichtquelle und/oder des realen Objekts zu einem beliebigen Punkt der Bildfläche umfassen.

Das erfindungsgemäße Verfahren ermöglicht es somit, einen Übergang zwischen der realen Szene und der virtuellen Szene so zu gestalten, dass für den Signalempfänger ein im Wesentlichen nahtloser Übergang entsteht. Beispielsweise kann ein Schatten, welcher durch die Beleuchtung des realen Objekts durch die wenigstens eine reale Lichtquelle erzeugt wird und welcher sich bis zu der Bildfläche erstreckt, so bei der Darstellung der virtuellen Szene an der Bildfläche berücksichtigt werden, dass sich der Schatten nahtlos und in einer realistischen Weise aus der realen Szene in die virtuelle Szene fortsetzt. Ändert sich die Beleuchtungssituation in der realen Szene, beispielsweise durch Verlagern der wenigstens einen realen Lichtquelle, so kann der sich ändernde Schattenwurf in der realen Szene durch das erfindungsgemäße Verfahren sogleich, zum Beispiel in Echtzeit oder zumindest nahezu in Echtzeit, in die Darstellung der virtuellen Szene übertragen werden.

Um insbesondere die Darstellung eines durch ein Objekt erzeugten Schattens realistisch berechnen zu können, aber nicht darauf begrenzt, kann der Schritt des Erfassens der Position des realen Objekts relativ zu der wenigstens einen realen Lichtquelle ferner ein Erfassen einer Geometrie des realen Objekts, betrachtet zumindest aus der Perspektive der wenigstens einen realen Lichtquelle auf das reale Objekt, umfassen. Die Geometrie des realen Objekts kann zum Beispiel eine Größe und/oder eine Außenkontur und/oder eine, insbesondere dreidimensionale, Form und/oder eine Oberflächenstruktur des realen Objekts umfassen. In Kenntnis der Geometrie des realen Objekts kann bei der Berechnung des Simulationsmodells der realen Szene und/oder bei der Berechnung des Modells der virtuellen Szene ein Schatten des Objekts oder eine andere durch das Objekt hervorgerufene Beeinflussung des Lichts in einer verbesserten Weise berechnet werden.

Die Informationen über das virtuelle Objekt können ferner eine Geometrie und/oder eine Strahlungseigenschaft und/oder eine Reflexionseigenschaft und/oder einen Transparenzgrad und/oder eine Farbe und/oder eine Struktur des virtuellen Objekts umfassen. In einer analogen Weise zu dem Erfassen der Geometrie des realen Objekts können auch Informationen über die Geometrie des virtuellen Objekts dazu verwendet werden, eine Beleuchtungssituation im Zusammenhang mit dem virtuellen Objekt, beispielsweise einen Schattenwurf durch dieses Objekt, in einer verbesserten Weise berechnen zu können. Die Beleuchtung des virtuellen Objekts kann dabei von der wenigstens einen realen Lichtquelle und/oder von einer virtuellen Lichtquelle ausgehen. Auch Informationen bezüglich einer Reflexionseigenschaft und/oder eines Transparenzgrads und/oder einer Farbe und/oder einer Struktur des virtuellen Objekts können dazu verwendet werden, eine in der virtuellen Szene vorherrschende Beleuchtungssituation noch realistischer berechnen zu können. Ferner kann auf Grundlage der Informationen über das virtuelle Objekt berechnet werden, in welcher Weise sich die Beleuchtungssituation in der virtuellen Szene auf die reale Szene auswirken kann, sodass eine entsprechende Lichtausgabe der Bildausgabeeinheit an der Bildfläche dahingehend angepasst werden kann. In anderen Worten kann das erfindungsgemäße Verfahren dazu geeignet sein, Auswirkungen der realen Szene in die virtuelle Szene zu berücksichtigen und/oder Auswirkungen der virtuelle Szene auf die reale Szene zu berücksichtigen. Insbesondere für die Auswirkungen der Beleuchtungssituation der virtuellen Szene auf die reale Szene, aber auch für die Beleuchtungssituation innerhalb der virtuellen Szene, kann eine Strahlungseigenschaft des virtuellen Objekts, zum Beispiel als eine virtuelle Lichtquelle, von Bedeutung sein. Zum Beispiel in dem Fall, dass das virtuelle Objekt eine hoch reflektive, insbesondere spiegelnde, Oberfläche aufweist, kann eine Beleuchtung des virtuellen Objekts durch eine reale und/oder virtuelle Lichtquelle eine sehr ähnliche Beleuchtungssituation durch das virtuelle Objekt hervorrufen, wie es auch der Fall wäre, wenn das virtuelle Objekt selbst eine virtuelle Lichtquelle wäre.

In einer Weiterbildung der vorliegenden Erfindung kann die wenigstens eine reale Lichtquelle und/oder der Signalempfänger und/oder das reale Objekt mit einem Trackingsystem verbunden sein. Das Trackingsystem kann insbesondere dazu eingerichtet sein, je nachdem, mit welcher Komponente das Trackingsystem verbunden ist, eine Erfassung von wenigstens einem aus dem Folgenden zu ermöglichen:
- der Position und/oder der Orientierung der wenigstens einen realen Lichtquelle relativ zu der Bildfläche und/oder relativ zu dem Signalempfänger und/oder relativ zu dem realen Objekt, und/oder
- der Position und/oder der Orientierung des Signalempfängers relativ zu der Bildfläche und/oder relativ zu dem realen Objekt und/oder relativ zu der wenigstens einen realen Lichtquelle, und/oder
- der Position und/oder Orientierung des realen Objekts relativ zu der Bildfläche und/oder relativ zu dem Signalempfänger und/oder relativ zu der wenigstens einen realen Lichtquelle.

Die so erfassten Informationen können wiederum wenigstens einen Teil der Informationen zur Erstellung des Simulationsmodells der realen Szene bilden.

Das Trackingsystem kann dabei als passives Trackingsystem, welches auf der Grundlage von an der zu trackenden Komponente, insbesondere an einer daran angebrachten Trackingeinheit, reflektiertem Licht, insbesondere retroreflektiertem Infrarotlicht, fungiert, und/oder als aktives Trackingsystem ausgebildet sein, welches dazu eingerichtet ist, aktiv ein Signal zu emittieren, beispielsweise ein Lichtsignal oder ein elektromagnetisches Signal.

Durch das Vorsehen eines Trackingsystems und der damit einhergehenden Erfassung der Position und/oder der Orientierung der damit verbundenen Komponente liegt diese Information unmittelbar in digitaler Form vor und kann direkt in eine Berechnung des Simulationsmodells der realen Szene und/oder des Modells der virtuellen Szene einfließen.

Alternativ oder zusätzlich kann der Schritt des Erfassens einer Position eines realen Objekts in der realen Szene die Verwendung einer Tiefeninformations-Erfassungseinrichtung umfassen, welche dazu eingerichtet ist, Tiefeninformationen zumindest zu Abschnitten der realen Szene zu erfassen. In anderen Worten kann die Verwendung einer Tiefeninformations-Erfassungseinrichtung anstatt der Verwendung eines Trackingsystems oder zusätzlich dazu eingesetzt werden. So können zu ein und demselben realen Objekt in der realen Szene sowohl Tiefeninformationen unter Verwendung der Tiefeninformations-Erfassungseinrichtung als auch Informationen zu der Position und/oder Orientierung unter Verwendung des Trackingsystems gesammelt werden. Natürlich ist es, auf die gesamte reale Szene betrachtet, denkbar, dass zu unterschiedlichen Komponenten der realen Szene Informationen unter Verwendung von unterschiedlichen Erfassungseinrichtungen gesammelt werden.

Zum Beispiel kann aus aufgenommenen Kamerabildern, insbesondere unter Verwendung von Verfahren der Stereotriangulation und/oder durch photogrammetrische Verfahren und/oder mittels Tiefensensoren (zum Beispiel Time-of-Flight Sensoren), eine Tiefenkarte erzeugt werden und darauf basierend ein dreidimensionales Simulationsmodell der realen Szene berechnet werden.

Dabei kann die Tiefeninformations-Erfassungseinrichtung insbesondere ein stereoskopisches Kamerapaar, welches insbesondere wenigstens eine HDR-Kamera umfasst, und/oder eine LIDAR-Einheit und/oder eine RGB-D-Einheit umfassen. Diese Liste soll dabei nicht als abschließend verstanden werden, sodass auch andere geeignete Systeme als Tiefeninformations-Erfassungseinrichtung eingesetzt werden können.

Die Tiefeninformations-Erfassungseinrichtung kann insbesondere dazu eingerichtet sein, zur Erzeugung des Simulationsmodells der realen Szene eine photogrammetrische Aufnahmetechnik einzusetzen. Beispielsweise kann hierzu eine Vielzahl an Kameras eingesetzt werden, welche dazu eingerichtet sind, die reale Szene aus verschiedenen Perspektiven und/oder Betrachtungsrichtungen zu erfassen. So kann das erzeugte Simulationsmodell eine Geometrie der realen Szene nahezu vollständig oder sogar vollständig, insbesondere im Vergleich zu einem durch eine Tiefenkarte erzeugten Modell vollständiger, widerspiegeln. Dabei können durch Tiefenkameras verursachte Verdeckungen bei dem durch photogrammetrische Aufnahmetechnik erzeugten Simulationsmodell vermieden werden. Somit kann zum Beispiel ein Schattenwurf eines räumlich ausgedehnten Objekts realistischer simuliert werden, da die vollständige Objektgeometrie bekannt ist.

Alternativ oder zusätzlich kann die Tiefeninformations-Erfassungseinrichtung dazu eingerichtet sein, zur Erzeugung des Simulationsmodells der realen Szene ein KI-basiertes Berechnungsverfahren einzusetzen, insbesondere NeRF oder Gaussian Splatting. Ein Kl-basiertes Berechnungsverfahren kann insbesondere dazu geeignet sein, neben einem 3D Modell der Szene (wie bereits bei Photogrammmetrie) auch Materialeigenschaften, wie Reflektivität, Rauigkeit und/oder Transparenz der Oberflächen (siehe auch die weiter oben und weiter unten gegebenen Beschreibungen hierzu), zu erfassen und damit eine realitätsgetreuere Darstellung im Hinblick auf die lichtformenden Eigenschaften der realen Szene zu ermöglichen. Zum Beispiel können so spiegelnde Oberflächen durch dieses Berechnungsverfahren als solche erkannt werden. Das Modell kann folglich das auftreffende Licht physikalisch korrekt reflektieren.

In diesem Zusammenhang kann die Tiefeninformations-Erfassungseinrichtung mit einem Trackingsystem verbunden sein, welches dazu eingerichtet ist, eine Erfassung der Position und/oder Orientierung der Tiefeninformations-Erfassungseinrichtung relativ zu der Bildfläche und/oder relativ zu dem realen Objekt und/oder relativ zu der wenigstens einen realen Lichtquelle zu ermöglichen, wobei die Position und/oder die Orientierung der Tiefeninformations-Erfassungseinrichtung einen Teil der Informationen zur Erstellung des Simulationsmodells der realen Szene bilden. In einer zu der weiter oben gegebenen Beschreibung eines Trackingsystems analogen Weise, auf welche hiermit explizit verwiesen sei, kann auch die Position und/oder Orientierung der Tiefeninformations-Erfassungseinrichtung, und insbesondere Änderungen davon, direkt in einer digitalen Weise erfasst werden und so bei einer (z.B. erneuten) Erstellung des Simulationsmodells der realen Szene verarbeitet werden.

Das Verfahren kann ferner die Schritte umfassen:
- Bereitstellen eines digitalen Leuchtenmodells der wenigstens einen realen Lichtquelle, welches Informationen in Bezug auf wenigstens eines umfassen aus einer Hauptabstrahlrichtung, eines Abstrahlkegels, eines Abstrahlfarbspektrums und einer Abstrahlhelligkeit der wenigstens einen realen Lichtquelle, und
- Integrieren des digitalen Leuchtenmodells bei dem Schritt des Erzeugens des dreidimensionalen Simulationsmodells der realen Szene.

Insbesondere kann das Bereitstellen und Integrieren des digitalen Leuchtenmodells alternativ oder zusätzlich dazu vorgesehen sein, Informationen bezüglich der wenigstens einen realen Lichtquelle zu erfassen, wie beispielsweise Informationen bezüglich einer Abstrahlrichtung und/oder Abstrahlkegels und/oder eines emittierten Farbspektrums und/oder einer Helligkeit und dergleichen. So kann es beispielsweise ausreichend sein, eine Position und/oder Orientierung und/oder Beleuchtungseinstellungen der realen Lichtquelle zu kennen, insbesondere ohne diese über eine externe Einheit erfassen zu müssen, und diese auf das digitale Leuchtenmodell zu übertragen, um das dreidimensionale Simulationsmodell der realen Szene entsprechend der tatsächlich vorherrschenden Situation erzeugen zu können.

Insbesondere können die Schritte des Verfahrens wiederholt ausgeführt werden, wobei das Verfahren dazu eingerichtet sein kann, Änderungen der realen Szene, insbesondere in Echtzeit, in einer Erzeugung eines aktualisierten dreidimensionalen Simulationsmodells der realen Szene und somit in einer aktualisierten Darstellung der virtuellen Szene durch die Bildausgabeeinheit an der Bildfläche abzubilden. Um einen Betrachter, unabhängig davon, ob der Betrachter die Szene direkt oder anhand von aufgenommenem Material betrachtet, dahingehend glaubhaft beeinflussen zu können, dass er einen Übergang von der realen Szene in die virtuelle Szene nicht wahrnimmt oder zumindest als nicht störend empfindet, kann es besonders vorteilhaft sein, wenn sich eine Änderung in der realen Szene unmittelbar auf die virtuelle Szene auswirkt. Gleiches kann natürlich für den umgekehrten Fall anwendbar sein, dass sich eine Änderung in der virtuellen Szene unmittelbar auf die reale Szene auswirkt. Durch ein iteratives Neuberechnen des dreidimensionalen Simulationsmodells der realen Szene und/oder des Modells der virtuellen Szene können die beiden Szenen direkt aufeinander abgestimmt werden, sodass für den Betrachter der Eindruck einer tatsächlichen Interaktion zwischen realer Szene und virtueller Szene und damit ein Auflösen des Übergangs zwischen den beiden Szenen entstehen kann.

Die Bildausgabeeinheit kann wenigstens eines umfassen aus einer LED-Wand, einem Computerbildschirm, einem Fernsehbildschirm und einer Projektionswand, wobei die Bildfläche der Bildausgabeeinheit insbesondere im Wesentlichen eben oder gekrümmt und/oder eine rechteckige, runde, ovale oder polygonale Außenkontur aufweisen kann. Hierbei kann die Bildfläche der Bildausgabeeinheit auch mehrere zueinander benachbarte oder ineinander übergehende Abschnitte umfassen, welche zueinander unterschiedliche Größen und/oder Formen aufweisen können.

Vorteilhafterweise kann die Bildausgabeeinheit dazu eingerichtet sein, gerichtetes Licht zu emittieren, wobei insbesondere voneinander gesonderte Abschnitte der Bildausgabeeinheit dazu eingerichtet sein können, Licht in jeweils voneinander unterschiedlichen Richtungen zu emittieren. Im Gegensatz zu dem Emittieren von Licht über die Bildfläche der Bildausgabeeinheit in einer diffusen Weise kann durch das Emittieren von Licht über die Bildfläche der Bildausgabeeinheit in einer gerichteten Weise die in der virtuellen Szene vorherrschende Beleuchtungssituation verbessert auf die reale Szene übertragen werden. So kann beispielsweise das von einer virtuellen Lichtquelle, zum Beispiel von einem virtuellen Scheinwerfer, von einem virtuellen Feuer oder von einer virtuellen Sonneneinstrahlung, virtuell emittierte Licht derart an der Bildfläche der Bildausgabeeinheit ausgegeben werden, dass hierdurch ein reales Objekt eine Beleuchtungssituation aufweist (z. B. Schatten, Reflexion etc.), welche derjenigen Beleuchtungssituation entspricht, in welcher das reale Objekt durch das reale Pendant der virtuellen Lichtquelle beleuchtet werden würde.

Zu diesem Zweck kann die Bildausgabeeinheit unter Verwendung der Lichtfeld-Technologie ausgebildet sein, sodass die Bildausgabeeinheit dazu eingerichtet ist, entsprechendes gerichtetes Licht zu emittieren. Ferner kann es hierbei vorgesehen sein, das von der virtuellen Lichtquelle emittierte Licht unter Verwendung eines Ray-Tracing-Verfahrens zu berechnen, um eine Lichtabgaberichtung der Bildausgabeeinheit, insbesondere eine Lichtabgaberichtung von jeweiligen Lichtemissionseinheiten der Bildausgabeeinheit, zu ermitteln.

Der Schritt des Erfassens einer Position eines realen Objekts in der realen Szene kann das Erfassen einer Punktewolke umfassen, deren Punkte wenigstens auf einer Oberfläche des realen Objekts angeordnet sind, und/oder das Erfassen eines Gittermodells umfassen, wobei das Gittermodell in seiner dreidimensionalen Form, zumindest näherungsweise in Abhängigkeit der Maschengröße des Gittermodells, dazu geeignet ist, einer Oberfläche des realen Objekts zu entsprechen. So kann für jeden Punkt der Punktewolke ein Abstand zum Beispiel zu einer zugehörigen Tiefeninformations-Erfassungseinrichtung und/oder, falls gewünscht, zu einem anderen Bezugspunkt, wie beispielsweise der Bildfläche, erfasst werden und somit ein dreidimensionales digitales Abbild des Abschnitts der realen Szene erzeugt werden, welcher durch die Punktewolke abgetastet worden ist. Analoges gilt für eine Tiefeninformations-Erfassungseinrichtung, welche dazu eingerichtet ist, anstatt einer Punktewolke ein Gittermodell zu verwenden, um digitale dreidimensionale Informationen eines realen Objekts beziehungsweise eines Abschnitts der realen Szene zu erzeugen. Auch ist es denkbar, dass eine entsprechende Tiefeninformations-Erfassungseinrichtung dazu eingerichtet ist, zunächst eine Punktewolke zum Abtasten eines Abschnitts der realen Szene zu verwenden und anschließend die Punkte derart miteinander zu verbinden, dass ein Gittermodell erzeugt wird.

Das Verfahren kann ferner den Schritt umfassen, eine Strahlungseigenschaft und/oder eine Reflexionseigenschaft und/oder einen Transparenzgrad und/oder eine Farbe und/oder eine Struktur des realen Objekts zu erfassen und diese dem Schritt des Erzeugens des dreidimensionalen Simulationsmodells der realen Szene bereitzustellen. Auf diese Weise kann eine sogenannte "Emissive Map" (auch als "Emission Map" bezeichnet) erzeugt werden. Durch das Erzeugen und Integrieren einer solchen Emissive Map bei der Erzeugung des dreidimensionalen Simulationsmodells der realen Szene kann ein noch exakteres Abbild der realen Szene erzeugt werden, sodass dessen Einfluss auf die virtuelle Szene, und/oder umgekehrt, noch realistischer umgesetzt werden kann.

Das Verfahren kann ferner den Schritt umfassen, einem erfassten realen Objekt ein entsprechendes dreidimensionales Objektmodell zuzuordnen und dieses der Steuerungsvorrichtung zum Erzeugen des dreidimensionalen Simulationsmodells der realen Szene bereitzustellen. Durch die Verwendung eines Objektmodells kann insbesondere ein Übertragen eines erfassten realen Objekts in die Informationen für das zu berechnende Simulationsmodell der realen Szene, insbesondere das detaillierte (realitätsnahe) Erfassen des realen Objekts, ersetzt werden. Dies kann insbesondere zutreffend sein, wenn ein reales Objekt auf Grundlage eines Objektmodells erstellt worden ist.

In einem weiteren Aspekt der vorliegenden Erfindung wird die eingangs erwähnte Aufgabe durch eine Vorrichtung gelöst, welche dazu eingerichtet ist, reale und virtuelle Inhalte einer Szene miteinander abzugleichen, wobei die Vorrichtung umfasst:
- wenigstens eine reale Lichtquelle in der realen Szene,
- eine Steuerungsvorrichtung, welche dazu eingerichtet ist, Informationen zu der wenigstens einen realen Lichtquelle zu erhalten und/oder zu enthalten, wobei die Informationen wenigstens eines umfassen aus einer Hauptabstrahlrichtung, eines Abstrahlkegels, eines Abstrahlfarbspektrums und einer Abstrahlhelligkeit der wenigstens einen realen Lichtquelle,
- eine Erfassungseinheit, welche dazu eingerichtet ist, eine Position eines realen Objekts in der realen Szene relativ zu der wenigstens einer realen Lichtquelle und/oder einer Beleuchtungssituation des realen Objekts in der realen Szene auf Grundlage des von der wenigstens einen realen Lichtquelle abgegebenen Lichts zu erfassen,
   wobei die Steuerungsvorrichtung dazu eingerichtet ist, ein dreidimensionales Simulationsmodell der realen Szene zu erzeugen, welches wenigstens eines umfasst aus den Informationen zu der wenigstens einen realen Lichtquelle, der Position des realen Objekts relativ zu der wenigstens einen realen Lichtquelle und der

Beleuchtungssituation des realen Objekts,
- eine Modell-Erzeugungseinheit, welche dazu eingerichtet ist, ein dreidimensionales Modell einer virtuellen Szene zu erzeugen, welches dazu geeignet ist, an einer Bildausgabeeinheit mit einer zur Darstellung geeigneten Bildfläche dargestellt zu werden,
   wobei das Modell der virtuellen Szene wenigstens Informationen bezüglich einer Position eines virtuellen Objekts relativ zu der Bildfläche umfasst,
- eine Kombinationseinheit, welche dazu eingerichtet ist, das Simulationsmodell der realen Szene mit dem Modell der virtuellen Szene zu kombinieren, sodass an der Bildfläche ein Übergang aus der realen Szene in die virtuelle Szene derart stattfindet, dass die Beleuchtungssituation des realen Objekts in die Darstellung der virtuellen Szene durch die Bildausgabeeinheit an der Bildfläche fortgesetzt ist, und
- einen Signalempfänger, welcher dazu eingerichtet ist, die reale Szene und die virtuelle Szene zumindest abschnittsweise zu erfassen.

Es sei an dieser Stelle explizit darauf hingewiesen, dass sämtliche in Bezug auf das erfindungsgemäße Verfahren beschriebenen Merkmale, Effekte und Vorteile zumindest teilweise auch auf die erfindungsgemäße Vorrichtung anwendbar sein können, und umgekehrt, sodass hiermit für die Beschreibung der Merkmale, Effekte und Vorteile der erfindungsgemäßen Vorrichtung auf die weiter oben gegebene Beschreibung des erfindungsgemäßen Verfahrens verwiesen sei.

Die erfindungsgemäße Vorrichtung kann beispielsweise derart weitergebildet sein, dass die Erfassungseinheit zum Erfassen der Position des realen Objekts in der Bildfläche der Bildausgabeeinheit oder dazu benachbart angeordnet sein kann. Auf diese Weise kann zum Beispiel die Position des realen Objekts zu der Bildfläche der Bildausgabeeinheit in direkter Weise erfasst werden, ohne den relativen Abstand des realen Objekts zu der Bildfläche auf Grundlage von beispielsweise einer Relativposition des realen Objekts zur Erfassungseinheit und einer Relativposition der Bildfläche zur Erfassungseinheit berechnen zu müssen.

Vorteilhafterweise kann die Erfassungseinheit eine Vielzahl an Kameras umfassen, welche, insbesondere in einer Matrix-Anordnung, an der Bildfläche der Bildausgabeeinheit angeordnet sind, wobei die Kameras insbesondere zusammen eine Sparse-Lightfield-Anordnung bilden können und dazu eingerichtet sein können, das Lichtfeld in der Bildfläche erfassen. Dabei sei erwähnt, dass der Ausdruck "Erfassen" in diesem Zusammenhang auch ein "Bestimmen, insbesondere Schätzen, auf Grundlage der erfassten Informationen" bedeuten kann. Durch eine solche Anordnung der Erfassungseinheit an der Bildfläche der Bildausgabeeinheit kann das auf die Bildfläche auftreffende Licht, insbesondere eine gesamte Beleuchtungssituation der Bildfläche, direkt an der Bildfläche erfasst werden.

Die Erfassungseinheit kann eine Vielzahl an Kameras, insbesondere RGB-Kameras, umfassen, welche dazu eingerichtet sind, die reale Szene aus verschiedenen Perspektiven und/oder aus verschiedenen Betrachtungsrichtungen zu erfassen. Hierzu sei insbesondere auf die weiter oben gegebene Beschreibung zum Erzeugung des Simulationsmodells der realen Szene mit einem Kl-basierten Berechnungsverfahren verwiesen.

Die vorliegende Erfindung wird im Nachfolgenden anhand eines Ausführungsbeispiels mit Bezug auf die begleitenden Zeichnungen in größerem Detail beschrieben. Es stellt dar:
- Figur 1: ein Flussdiagramm einer Ausführungsform des erfindungsgemäßen Verfahrens; und
- Figuren 2 und 3: schematische Ansichten von Beleuchtungssituationen aufgrund von realen und virtuellen Lichtquellen.

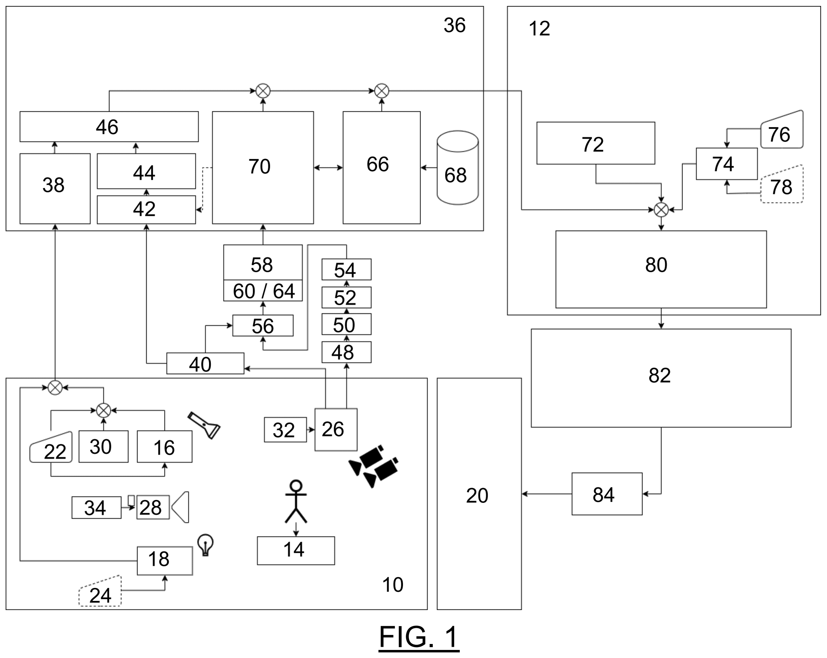

Das erfindungsgemäße Verfahren ist dazu geeignet, Inhalte einer realen Szene 10 mit Inhalten einer virtuellen Szene 12 abzugleichen. Als einen solchen realen Inhalt umfasst die reale Szene 10 hier eine Person 14, zum Beispiel einen Schauspieler, im Sinne eines realen Objekts 14. Die Person 14 wird in der realen Szene 10 von einer ersten realen Lichtquelle 16 und einer zweiten realen Lichtquelle 18 beleuchtet, sodass die Person 14 in der Darstellung gemäß Figur 1 einen Schatten nach rechts in Richtung einer Bildfläche 20 einer Bildausgabeeinheit wirft. Die erste reale Lichtquelle 16 kann hier beispielsweise ein Scheinwerfer sein, welcher über eine zugehörige Lichtkonsole 22 in seinen Abstrahleigenschaften einstellbar sein kann. Die zweite reale Lichtquelle 18 kann hier beispielsweise eine Glühbirne sein, welche für eine allgemeine Raumbeleuchtung sorgt und welche über eine zugehörige Konsole 24, zum Beispiel wenigstens in ihrer Helligkeit, einstellbar sein kann und/oder darüber ein- und ausschaltbar sein kann.

Die reale Szene 10 umfasst in der in Figur 1 dargestellten Ausführungsform ferner ein Kamerapaar 26, welches dazu eingerichtet ist, unter Verwendung eines stereoskopischen Erfassungsverfahrens eine Position der Person 14 in der realen Szene 10 beispielsweise relativ zu der ersten realen Lichtquelle 16 zu erfassen. Alternativ oder zusätzlich kann das Kamerapaar 26 auch dazu eingerichtet sein, eine Beleuchtungssituation der Person 14 durch die beiden realen Lichtquellen 16 und 18 zu erfassen.

Da das in Figur 1 dargestellte Ausführungsbeispiel ein Filmset zur Erzeugung eines Films darstellt, umfasst die reale Szene 10 ferner eine Produktionskamera 28, welche dazu eingerichtet ist, die Person 14 und auch Abschnitte der Bildfläche 20 der Bildausgabeeinheit zu erfassen. Dabei sei der Vollständigkeit halber erwähnt, dass es bei bestimmten Filmsequenzen auch vorkommen kann, dass die Produktionskamera 28 ausschließlich Teile der realen Szene 10 oder ausschließlich Teile der Bildfläche 20 erfassen kann.

In dem hier dargestellten Ausführungsbeispiel ist jedes aus der ersten realen Lichtquelle 16, dem Kamerapaar 26 und der Produktionskamera 28 mit einem jeweiligen Trackingsystem 30, 32, 34 verbunden, wodurch es ermöglicht wird, eine Position und/oder Orientierung der damit verbundenen Komponente in der realen Szene 10, zum Beispiel relativ zu der Bildfläche 20, zu erfassen.

Informationen über die Abstrahlcharakteristik der ersten realen Lichtquelle 16 sowie über deren Position und/oder Orientierung, über die Abstrahlcharakteristik der zweiten realen Lichtquelle 18 und gegebenenfalls über die Position und/oder Orientierung der Produktionskamera 28 können zusammengeführt werden und als Informationen für die Berechnung eines Simulationsmodells 36 der realen Szene 10 bereitgestellt werden. Dabei können die voranstehend erwähnten Informationen als ein parametrisches Leuchtenmodell der realen Lichtquellen 38 für die Erzeugung des Simulationsmodells 36 bereitgestellt werden.

Informationen, welche durch das Kamerapaar 26 erfasst worden sind, können zum einen zunächst einer Farbkalibrierung 40 unterzogen werden und anschließend ebenfalls als Informationen zur Erzeugung des Simulationsmodells 36 bereitgestellt werden. Dabei können die durch das Kamerapaar 26 erfassten Informationen dazu verwendet werden, zunächst eine Schätzung der Lichtquellen durchzuführen, um so neben dem parametrischen Leuchtenmodell der realen Lichtquellen 38 ein parametrisches Leuchtenmodell von geschätzten Lichtquellen 44 erhalten zu können. Das parametrische Leuchtenmodell von realen Lichtquellen 38 und das parametrische Leuchtenmodell von geschätzten Lichtquellen 44 können anschließend miteinander zu einem direkten Beleuchtungsmodell 46 verarbeitet werden, welches Informationen zu wenigstens den Lichtabgaberichtungen und/oder den Lichtmengen der realen Lichtquellen umfasst.

Zum anderen können die über das Kamerapaar 26 erfassten Informationen zunächst einer Rektifizierung 48, insbesondere einer Kalibrierung 48, unterzogen werden, bei welcher zum Beispiel optische Fehler, wie beispielsweise Verzerrungen und/oder Farbabweichungen, ausgeglichen werden können. Die rektifizierten Informationen können anschließend einer Tiefenschätzung 50 unterzogen werden, um zumindest einen Abstand des realen Objekts 14 (hier der Person 14) zu der Bildfläche 20, insbesondere dreidimensionale Positionsdaten des realen Objekts 14 in der realen Szene 10, erfassen zu können. Hierfür können in dem in Figur 1 dargestellten Ausführungsbeispiel Punkte 52 einer Punktewolke verwendet werden, deren dreidimensionale Position jeweiligen Punkten an einer Oberfläche des realen Objekts 14 entsprechen. Diese Punkte 52 der dreidimensionalen Punktewolke können anschließend zu einem Gittermodell 54 verbunden werden. Dieses dreidimensionale Gittermodell 54 kann mit Informationen aus der Farbkalibrierung 40 zu einem Farbinformation-Gittermodell 56 kombiniert werden, um auf dieser Grundlage eine sogenannte "Emissive Map" (auch als "Emission Map" bezeichnet) erzeugen zu können. In dieser Emissive Map können zum Beispiel Bereiche des dreidimensionalen Gittermodells markiert werden, welche als selbstleuchtende Oberflächen betrachtet werden, und/oder einem jeweiligen Bereich des dreidimensionalen Gittermodells, welcher einem bestimmten Bereich der realen Szene 10 entspricht, können Materialeigenschaften zugeordnet werden, wie sie auch der realen Szene 10 entsprechen. Diese Materialeigenschaften können beispielsweise Informationen bezüglich einer Reflektivität, einer Diffusion, einer Transparenz, eines Glanzgrads, einer Oberflächenbeschaffenheit (zum Beispiel einer Oberflächenrauheit) und/oder einer Normalenrichtung auf den jeweiligen Bereich des dreidimensionalen Gittermodells entsprechen. Optional können die Farbinformationen auch in einer gesonderten "Colour Map" 60 dem dreidimensionalen Gittermodell zugeordnet werden und/oder können die Oberflächeninformationen zu dem realen Objekt 14, insbesondere die Reflexionseigenschaften, in einer gesonderten "PBR Map" ("physically based rendering map") 64 dem dreidimensionalen Gittermodell zugeordnet werden.

In dem in Figur 1 dargestellten Ausführungsbeispiel kann es möglich sein, dreidimensionale Objektmodelle 66 aus einer Objektdatenbank 68 zu entnehmen, sodass es ermöglicht werden kann, anstelle eines Erfassens einer Geometrie des realen Objekts 14 ein bereits vorliegendes dreidimensionales Objektmodell 66 zu verwenden, welches dem realen Objekt 14 entspricht. Die erfassten und/oder digital vorliegenden dreidimensionalen Daten zu dem realen Objekt 14 können zusammen mit wenigstens der Emission Map 58 zu einem digitalen Abbild 70 des realen Objekts 14 zusammengeführt werden. Auf Grundlage dieser Informationen, insbesondere des digitalen Abbilds 70 des realen Objekts 14 und dem direkten Beleuchtungsmodel 46, kann so ein hochrealistisches Simulationsmodell 36 der realen Szene 10 erzeugt werden.

Auf Seiten der virtuellen Szene 12 kann ein dreidimensionales Modell 72 der virtuellen Szene 12 erzeugt werden oder vorliegen. Beispielsweise kann das dreidimensionale Modell 72 der virtuellen Szene 12 eine Landschaft darstellen, deren Geometrie und/oder Texturen im Einzelnen bekannt sind. Die virtuelle Szene umfasst hier eine virtuelle Lichtquelle 74, wie beispielsweise die Scheinwerfer eines virtuellen Fahrzeugs, welches in der virtuellen Szene 12 enthalten ist. Die Abstrahleigenschaften der virtuellen Lichtquelle 74 können über eine erste virtuelle Konsole 76, beispielsweise in Bezug auf eine Helligkeit und/oder Lichtfarbe der virtuellen Lichtquelle, und über eine zweite virtuelle Lichtkonsole 78, beispielswiese in Bezug auf eine Position und/oder Orientierung der virtuellen Lichtquelle 74, eingestellt werden.

Das Simulationsmodell 36 der realen Szene 10, das dreidimensionale Modell 72 der virtuellen Szene 12 und die Informationen in Bezug auf die virtuelle Lichtquelle 74 können nun zusammengeführt werden, um ein kombiniertes dreidimensionales Modell 80 zu erhalten. In diesem kombinierten dreidimensionalen Modell 80 kann somit sowohl berücksichtigt sein, in welcher Weise das durch die beiden realen Lichtquellen 16 und 18 emittierte und gegebenenfalls durch das reale Objekt 14 reflektierte beziehungsweise abgeblockte Licht Auswirkungen auf eine Beleuchtungssituation der virtuellen Szene 12 haben kann, als auch in welcher Weise eine Beleuchtungssituation der virtuellen Szene 12, insbesondere auf Grundlage des durch die virtuelle Lichtquelle 74 emittierten und durch das dreidimensionale Modell 72 der virtuellen Szene 12 reflektierten beziehungsweise verschatteten Lichts, Auswirkungen auf die reale Szene 10 haben kann. Um nun eine korrekte Darstellung der virtuellen Szene 12 an der Bildfläche 20 der Bildausgabeeinheit ermitteln zu können, insbesondere in Bezug auf eine relative Position und/oder Orientierung der Produktionskamera 28 zu der Bildfläche 20, kann in einem Renderingprozess ein situatives kombiniertes dreidimensionales Modell 82 berechnet werden. Dieses situative dreidimensionale Modell 82 kann nun unter Verwendung eines Prozessors 84 der Bildausgabeeinheit an der Bildfläche 20, welche insbesondere als Lichtfeld-Bildwand ausgebildet sein kann, dargestellt werden. Eine Lichtfeld-Bildwand kann es ermöglichen, gerichtetes Licht in die reale Szene 10 zu emittieren und so einen realistischeren Übergang aus der virtuellen Szene 12 in die reale Szene 10 zu schaffen.

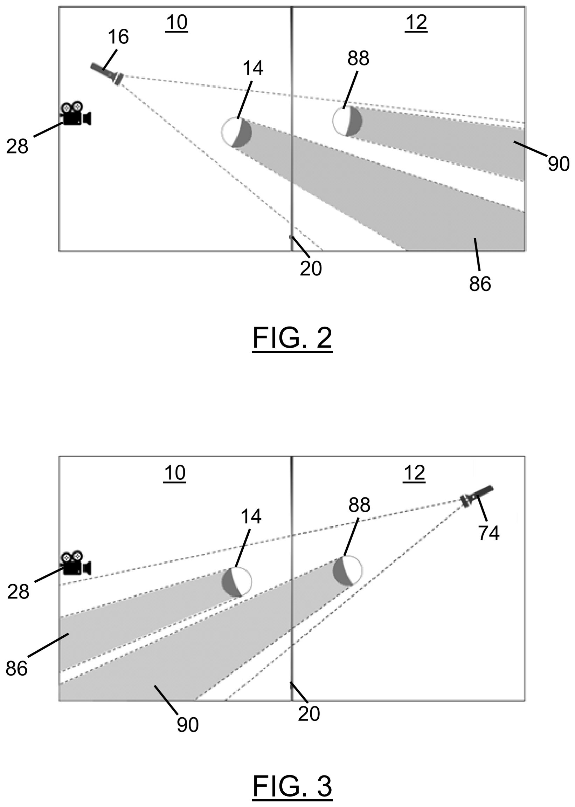

In den Figuren 2 und 3 ist schematisch und vereinfacht die Interaktion von Beleuchtungssituationen dargestellt.

So ist in Figur 2 auf Seiten der realen Szene 10 die reale Lichtquelle 16 dargestellt, welche das reale Objekt 14, welches hier vereinfacht als Kugel dargestellt ist, beleuchtet. Zum einen ist in Figur 2 zu erkennen, dass sich ein Schatten 86, welcher durch das reale Objekt 14 aufgrund der Beleuchtung durch die reale Lichtquelle 16 erzeugt wird, aus der realen Szene 10 über die Bildfläche 20 nahtlos und in realistischer Weise in die virtuelle Szene 12 weiter erstreckt. Zum anderen ist zu erkennen, dass auch die Beleuchtung der realen Lichtquelle 16 aus der realen Szene 10 in die virtuelle Szene 12 übertragen ist, sodass auch ein virtuelles Objekt 88 aufgrund der Beleuchtung der realen Lichtquelle 16 einen Schatten 90 erzeugt, welcher sich in der in Figur 2 gezeigten Darstellung ausschließlich in der virtuellen Szene 12 erstreckt.

Sowohl das reale Objekt 14 mit dessen Beleuchtungssituation und Schattenwurf 86 als auch das virtuelle Objekt 88 mit dessen Beleuchtungssituation und Schattenwurf 90 wird von der Produktionskamera 28 erfasst, sodass für den Betrachter des Filmmaterials der Übergang zwischen realer Szene 10 und virtueller Szene 12 verschwimmt.

Natürlich könnte anstelle der Produktionskamera 28 in den gezeigten Figuren 1 bis 3 auch direkt ein Betrachter vorgesehen sein, für welchen ein Übergang zwischen der realen Szene 10 und der virtuellen Szene 12 in einer Live-Darstellung verschwimmt.

In Figur 3 ist nun in einer zu Figur 2 analogen, jedoch umgekehrten, Weise dargestellt, wie sich eine virtuelle Beleuchtungssituation auf die reale Szene 10 auswirkt.

Zu diesem Zweck ist in der virtuellen Szene 12 eine virtuelle Lichtquelle 74 angeordnet, welche sowohl das virtuelle Objekt 88 als auch, über die Beleuchtungseigenschaften der Bildfläche 20 der Bildausgabeeinheit, das reale Objekt 14 beleuchtet. Der Schatten 90 des virtuellen Objekts 88 setzt sich dabei aus der virtuellen Szene 12 in die reale Szene 10 in einer nahtlosen und realistischen Weise fort. Dies kann insbesondere dadurch erreicht werden, dass die Bildfläche 20 mit Lichtemissionseinheiten versehen, welche dazu eingerichtet sind, gerichtetes Licht zu emittieren, sodass der Bereich des Schattens 90 in der realen Szene 10, im Vergleich zu einem Bereich der realen Szene 10, welcher durch die virtuelle Lichtquelle 74 direkt beleuchtet wird, mit einer verringerten Lichtmenge bestrahlt wird. Über die Lichtabgabeeigenschaft der Bildfläche 20 kann die Beleuchtung der virtuellen Lichtquelle 74 auch derart in die reale Szene 10 übertragen werden, dass das reale Objekt 14 in einer Weise beleuchtet werden kann, dass es den Schatten 86 wirft, welcher sich in der in Figur 3 gezeigten Situation ausschließlich in der realen Szene 10 erstreckt.

## Patentansprüche

1. Verfahren zum Abgleichen von realen und virtuellen Inhalten einer Szene (10, 12), wobei das Verfahren die folgenden Schritte umfasst:
- Bereitstellen von wenigstens einer realen Lichtquelle (16) in der realen Szene (10),
- Bereitstellen von Informationen zu der wenigstens einen realen Lichtquelle (16) an eine Steuerungsvorrichtung, wobei die Informationen wenigstens eines umfassen aus einer Hauptabstrahlrichtung, eines Abstrahlkegels, eines Abstrahlfarbspektrums und einer Abstrahlhelligkeit der wenigstens einen realen Lichtquelle (16),
- Erfassen einer Position eines realen Objekts (14) in der realen Szene (10) relativ zu der wenigstens einen realen Lichtquelle (16) und/oder einer Beleuchtungssituation des realen Objekts (14) in der realen Szene (10) auf Grundlage des von der wenigstens einen realen Lichtquelle (16) abgegebenen Lichts,
- Erzeugen durch die Steuerungsvorrichtung eines dreidimensionalen Simulationsmodells (36) der realen Szene (10), welches wenigstens eines umfasst aus den Informationen zu der wenigstens einen realen Lichtquelle (16), der Position des realen Objekts (14) relativ zu der wenigstens einen realen Lichtquelle (16) und der Beleuchtungssituation des realen Objekts (14),
- Erzeugen eines dreidimensionalen Modells (72) einer virtuellen Szene (12), welches dazu geeignet ist, an einer Bildausgabeeinheit mit einer zur Darstellung geeigneten Bildfläche (20) dargestellt zu werden,
wobei das Modell (72) der virtuellen Szene (12) wenigstens Informationen bezüglich einer Position eines virtuellen Objekts (88) relativ zu der Bildfläche (20) umfasst,
- Erfassen einer Relativposition der Bildfläche (20) zu der wenigstens einen realen Lichtquelle (16) und/oder zu dem realen Objekt (14),
- Kombinieren des Simulationsmodells (36) der realen Szene (10) mit dem Modell (72) der virtuellen Szene (12), sodass an der Bildfläche (20) ein Übergang aus der realen Szene (10) in die virtuelle Szene (12) derart stattfindet, dass die Beleuchtungssituation des realen Objekts (14) in die Darstellung der virtuellen Szene (12) durch die Bildausgabeeinheit an der Bildfläche (20) fortgesetzt wird, und
- Erfassen der realen Szene (10) und der virtuellen Szene (12) zumindest abschnittsweise durch einen Signalempfänger (28).

2. Verfahren nach Anspruch 1,
**dadurch gekennzeichnet, dass** der Schritt des Erfassens der Position des realen Objekts (14) relativ zu der wenigstens einen realen Lichtquelle (16) ferner ein Erfassen einer Geometrie des realen Objekts (14), betrachtet zumindest aus der Perspektive der wenigstens einen realen Lichtquelle (16) auf das reale Objekt (14), umfasst.

3. Verfahren nach einem der vorhergehenden Ansprüche,
**dadurch gekennzeichnet, dass** die Informationen über das virtuelle Objekt (88) ferner eine Geometrie und/oder eine Strahlungseigenschaft und/oder eine Reflexionseigenschaft und/oder einen Transparenzgrad und/oder eine Farbe und/oder eine Struktur des virtuellen Objekts (88) umfassen.

4. Verfahren nach einem der vorhergehenden Ansprüche,
**dadurch gekennzeichnet, dass** die wenigstens eine reale Lichtquelle (16) und/oder der Signalempfänger (28) und/oder das reale Objekt (14) mit einem Trackingsystem (30, 34) verbunden sind/ist.

5. Verfahren nach einem der vorhergehenden Ansprüche,
**dadurch gekennzeichnet, dass** der Schritt des Erfassens einer Position eines realen Objekts (14) in der realen Szene (10) die Verwendung einer Tiefeninformations-Erfassungseinrichtung (26) umfasst, welche dazu eingerichtet ist, Tiefeninformationen zumindest zu Abschnitten der realen Szene (10) zu erfassen,
insbesondere wobei die Tiefeninformations-Erfassungseinrichtung (26) ein stereoskopisches Kamerapaar, welches insbesondere wenigstens eine HDR-Kamera umfasst, und/oder eine LIDAR-Einheit und/oder eine RGB-D-Einheit umfasst.

6. Verfahren nach dem vorhergehenden Anspruch,
**dadurch gekennzeichnet, dass** die Tiefeninformations-Erfassungseinrichtung (26) dazu eingerichtet ist, zur Erzeugung des Simulationsmodells der realen Szene eine photogrammetrische Aufnahmetechnik einzusetzen, und/oder
dass die Tiefeninformations-Erfassungseinrichtung (26) dazu eingerichtet ist, zur Erzeugung des Simulationsmodells der realen Szene ein Kl-basiertes Berechnungsverfahren einzusetzen, insbesondere NeRF oder Gaussian Splatting, und/oder
dass die Tiefeninformations-Erfassungseinrichtung (26) mit einem Trackingsystem (32) verbunden ist, welches dazu eingerichtet ist, eine Erfassung der Position und/oder Orientierung der Tiefeninformations-Erfassungseinrichtung (26) relativ zu der Bildfläche (20) und/oder relativ zu dem realen Objekt (14) und/oder relativ zu der wenigstens einen realen Lichtquelle (16) zu ermöglichen, wobei die Position und/oder die Orientierung der Tiefeninformations-Erfassungseinrichtung (26) einen Teil der Informationen zur Erstellung des Simulationsmodells (36) der realen Szene (10) bilden.

7. Verfahren nach einem der vorhergehenden Ansprüche,
**dadurch gekennzeichnet, dass** das Verfahren ferner die Schritte umfasst:
- Bereitstellen eines digitalen Leuchtenmodells (38, 44, 46) der wenigstens einen realen Lichtquelle (16), welches Informationen in Bezug auf wenigstens eines umfassen aus einer Hauptabstrahlrichtung, eines Abstrahlkegels, eines Abstrahlfarbspektrums und einer Abstrahlhelligkeit der wenigstens einen realen Lichtquelle (16), und
- Integrieren des digitalen Leuchtenmodells (38, 44, 46) bei dem Schritt des Erzeugens des dreidimensionalen Simulationsmodells (36) der realen Szene (10).

8. Verfahren nach einem der vorhergehenden Ansprüche,
**dadurch gekennzeichnet, dass** die Schritte des Verfahrens wiederholt ausgeführt werden, wobei das Verfahren dazu eingerichtet ist, Änderungen der realen Szene (10), insbesondere in Echtzeit, in einer Erzeugung eines aktualisierten dreidimensionalen Simulationsmodells (36) der realen Szene (10) und somit in einer aktualisierten Darstellung der virtuellen Szene (12) durch die Bildausgabeeinheit an der Bildfläche (20) abzubilden.

9. Verfahren nach einem der vorhergehenden Ansprüche,
**dadurch gekennzeichnet, dass** die Bildausgabeeinheit wenigstens eines umfasst aus einer LED-Wand (20), einem Computerbildschirm, einem Fernsehbildschirm und einer Projektionswand, wobei die Bildfläche (20) der Bildausgabeeinheit insbesondere im Wesentlichen eben oder gekrümmt ist und/oder eine rechteckige, runde, ovale oder polygonale Außenkontur aufweist.

10. Verfahren nach einem der vorhergehenden Ansprüche,
**dadurch gekennzeichnet, dass** die Bildausgabeeinheit dazu eingerichtet ist, gerichtetes Licht zu emittieren, wobei insbesondere voneinander gesonderte Abschnitte der Bildausgabeeinheit dazu eingerichtet sind, Licht in jeweils voneinander unterschiedlichen Richtungen zu emittieren,
insbesondere wobei die Bildausgabeeinheit unter Verwendung der Lichtfeld-Technologie ausgebildet ist, sodass die Bildausgabeeinheit dazu eingerichtet ist, entsprechendes gerichtetes Licht zu emittieren.

11. Verfahren nach einem der vorhergehenden Ansprüche,
**dadurch gekennzeichnet, dass** der Schritt des Erfassens einer Position eines realen Objekts (14) in der realen Szene (10) das Erfassen einer Punktewolke umfasst, deren Punkte wenigstens auf einer Oberfläche des realen Objekts (14) angeordnet sind, und/oder das Erfassen eines Gittermodells umfasst, wobei das Gittermodell in seiner dreidimensionalen Form, zumindest näherungsweise in Abhängigkeit der Maschengröße des Gittermodells, dazu geeignet ist, einer Oberfläche des realen Objekts (14) zu entsprechen, und/oder
dass das Verfahren ferner den Schritt umfasst, eine Strahlungseigenschaft und/oder eine Reflexionseigenschaft und/oder einen Transparenzgrad und/oder eine Farbe und/oder eine Struktur des realen Objekts (14) zu erfassen und diese dem Schritt des Erzeugens des dreidimensionalen Simulationsmodells (36) der realen Szene (10) bereitzustellen, und/oder
dass das Verfahren ferner den Schritt umfasst, einem erfassten realen Objekt (14) ein entsprechendes dreidimensionales Objektmodell (66) zuzuordnen und dieses der Steuerungsvorrichtung zum Erzeugen des dreidimensionalen Simulationsmodells (36) der realen Szene (10) bereitzustellen.

12. Vorrichtung, welche dazu eingerichtet ist, reale und virtuelle Inhalte einer Szene (10, 12) miteinander abzugleichen, wobei die Vorrichtung umfasst:
- wenigstens eine reale Lichtquelle (16) in der realen Szene (10),
- eine Steuerungsvorrichtung, welche dazu eingerichtet ist, Informationen zu der wenigstens einen realen Lichtquelle (16) zu erhalten und/oder zu enthalten, wobei die Informationen wenigstens eines umfassen aus einer Hauptabstrahlrichtung, eines Abstrahlkegels, eines Abstrahlfarbspektrums und einer Abstrahlhelligkeit der wenigstens einen realen Lichtquelle (16),
- eine Erfassungseinheit (26), welche dazu eingerichtet ist, eine Position eines realen Objekts (14) in der realen Szene (10) relativ zu der wenigstens einer realen Lichtquelle (16) und/oder einer Beleuchtungssituation des realen Objekts (14) in der realen Szene (10) auf Grundlage des von der wenigstens einen realen Lichtquelle (16) abgegebenen Lichts zu erfassen,
- wobei die Steuerungsvorrichtung dazu eingerichtet ist, ein dreidimensionales Simulationsmodell (36) der realen Szene (10) zu erzeugen, welches wenigstens eines umfasst aus den Informationen zu der wenigstens einen realen Lichtquelle (16), der Position des realen Objekts (14) relativ zu der wenigstens einen realen Lichtquelle (16) und der Beleuchtungssituation des realen Objekts (14),
- eine Modell-Erzeugungseinheit, welche dazu eingerichtet ist, ein dreidimensionales Modell (72) einer virtuellen Szene (12) zu erzeugen, welches dazu geeignet ist, an einer Bildausgabeeinheit mit einer zur Darstellung geeigneten Bildfläche (20) dargestellt zu werden,
- wobei das Modell (72) der virtuellen Szene (12) wenigstens Informationen bezüglich einer Position eines virtuellen Objekts (88) relativ zu der Bildfläche (20) umfasst,
- eine Kombinationseinheit, welche dazu eingerichtet ist, das Simulationsmodell (36) der realen Szene (10) mit dem Modell (72) der virtuellen Szene (12) zu kombinieren, sodass an der Bildfläche (20) ein Übergang aus der realen Szene (10) in die virtuelle Szene (12) derart stattfindet, dass die Beleuchtungssituation des realen Objekts (14) in die Darstellung der virtuellen Szene (12) durch die Bildausgabeeinheit an der Bildfläche (20) fortgesetzt ist, und
- einen Signalempfänger (28), welcher dazu eingerichtet ist, die reale Szene (10) und die virtuelle Szene (12) zumindest abschnittsweise zu erfassen.

13. Vorrichtung nach dem vorhergehenden Vorrichtungsanspruch, **dadurch gekennzeichnet, dass** die Erfassungseinheit (26) zum Erfassen der Position des realen Objekts (14) in der Bildfläche (20) der Bildausgabeeinheit oder dazu benachbart angeordnet ist.

14. Vorrichtung nach einem der vorhergehenden Vorrichtungsansprüche, **dadurch gekennzeichnet, dass** die Erfassungseinheit (26) eine Vielzahl an Kameras umfasst, welche, insbesondere in einer Matrix-Anordnung, an der Bildfläche (20) der Bildausgabeeinheit angeordnet sind, wobei die Kameras insbesondere zusammen eine Sparse-Lightfield-Anordnung bilden und dazu eingerichtet sind, das Lichtfeld in der Bildfläche (20) erfassen.

15. Vorrichtung nach einem der vorhergehenden Vorrichtungsansprüche, **dadurch gekennzeichnet, dass** die Erfassungseinheit (26) eine Vielzahl an Kameras, insbesondere RGB-Kameras, umfasst, welche dazu eingerichtet sind, die reale Szene (10) aus verschiedenen Perspektiven und/oder aus verschiedenen Betrachtungsrichtungen zu erfassen.
